# FASCICULE DE BREVET EUROPEEN

(11) **EP 1 123 780 B1**
(45) Date de publication et mention de la délivrance du brevet: **04.04.2007**
(21) Numéro de dépôt: 01400314.9
(22) Date de dépôt: 08.02.2001
(51) Int. Cl.: B25B 11/00, B65G 47/91, B25J 15/06, F16C 11/06, B66C 1/02, B23Q 1/54

(54) **Organe de prehension orientable pour le transport ou l'usinage d'une piece de forme quelconque**
Ausrichtbare Vakuum-Greifervorrichtung für den Transport oder die Bearbeitung eines beliebig geformten Werkstückes
Orientatable vacuum gripping device for the transport or working of an irregularly shaped workpiece

(30) Priorité: 11.02.2000 FR 0001725
(43) Date de publication de la demande: 16.08.2001
(73) Titulaire: AIRBUS France, 31060 Toulouse (FR)
(72) Inventeur: Portal, Fabrice, 64530 Ger (FR)
(74) Mandataire: Poulin, Gérard

(56) Documents cités:
- EP-A- 0 490 746
- US-A- 4 269 383
- US-A- 5 395 098
- US-A- 5 590 870

## Description

### Domaine technique

L'invention concerne un organe de préhension orientable, conçu pour permettre l'usinage ou le transport d'une pièce de géométrie quelconque.

Un tel organe peut notamment être utilisé sur une table universelle destinée à assurer la préhension d'une ou plusieurs pièces lors de leur usinage ou de leur transport. Il autorise en particulier la préhension de pièces présentant des géométries très différentes et plus ou moins complexes.

Un organe de préhension orientable selon le préambule de la revendication 1 est decrit dans le brevet US 4 269 383.

### Etat de la technique

Comme l'illustre notamment le document FR-A-2 700 487, il est connu de transporter des pièces entre différents postes d'une installation industrielle, au moyen d'une palette de transport comprenant un plateau support horizontal muni d'une chambre intérieure formant une réserve de vide. La face supérieure du plateau support est traversée par des trous disposés selon un réseau régulier et débouchant dans la chambre intérieure. Selon les formes et les dimensions des pièces à transporter, chacun des trous reçoit soit un organe de préhension à ventouse, soit un organe de positionnement, soit un obturateur. Chaque organe de préhension comprend une colonnette verticale portant une ventouse de préhension fixe à son extrémité haute. Un robinet trois voies permet de mettre en communication chacune des ventouses soit avec l'atmosphère, soit avec le vide contenu dans la chambre intérieure du plateau support, au travers d'un passage cheminant dans la colonnette.

Du fait que les ventouses de préhension sont montées de façon fixe aux extrémités des colonnettes, ce type de palette de transport ne peut recevoir que des pièces planes. Or, les pièces à usiner sont rarement planes. De plus, leurs formes géométriques sont souvent différentes, d'une pièce à l'autre. L'utilisation d'une telle palette nécessiterait donc d'utiliser des organes de préhension spécifiques pour chacune des pièces. Cela est inacceptable dans un processus industriel, en raison du coût et des délais qui en découleraient.

Le document FR-A-2 711 123 se rapporte à un transporteur-culbuteur pour grandes pièces. L'appareil comprend deux plates-formes en vis-à-vis, équipées d'un grand nombre de colonnettes extensibles pourvues à leurs extrémités de ventouses de préhension montées sur des rotules. Dans cette installation, chacune des rotules est maintenue en appui contre un support de rotule ouvert solidaire de l'extrémité de la colonnette, par l'intermédiaire d'un cordon élastique. Dans chacune des ventouses, le vide assurant la préhension est fait à travers un tube central qui chemine dans la colonnette correspondante.

Cet agencement permet d'assurer la préhension de pièces à géométrie peu complexe, grâce au débattement des ventouses rendu possible par leur montage sur des rotules. Toutefois, le débattement global de chacune des ventouses est limité à environ 60° (+ ou - 30°), ce qui est très insuffisant pour permettre la préhension de pièces à géométries complexes.

Sur la base d'un agencement comparable à celui qui est décrit dans le document FR-A-2 711 123, les organes de préhension orientables existants n'autorisent pas un débattement global des ventouses de préhension supérieur à 80°(+ ou -40°) du fait que l'alimentation en vide se fait par un passage traversant la colonnette et le support dans lequel est reçue la rotule.

### Exposé de l'invention

L'invention a pour objet un organe de préhension orientable, dont la conception originale lui permet d'obtenir un débattement global d'au moins 90° (+ ou - 45°) de la ventouse assurant la préhension de la pièce, ce qui autorise le montage de pièces de géométries complexes et susceptibles de varier d'une pièce à l'autre, sans adaptation particulière.

Conformément à l'invention, ce résultat est obtenu au moyen d'un organe de préhension orientable, comprenant une rotule, un support de rotule ouvert dans lequel peut pivoter ladite rotule, un moyen formant ventouse porté par la rotule à l'extérieur dudit support de rotule, des moyens pour maintenir la rotule dans ledit support de rotule, et un premier passage débouchant à l'intérieur du moyen formant ventouse et comportant au moins un orifice formé sur l'un parmi la rotule et le moyen formant ventouse, ledit orifice étant raccordé sur un tube flexible, à l'extérieur du support de rotule, et apte à être relié à une source de vide, caractérisé en ce que les moyens pour maintenir la rotule dans ledit support de rotule comprennent un deuxième passage traversant le support de rotule, au moins un premier orifice de ce deuxième passage débouchant entre la rotule et le support de rotule.

Du fait que l'alimentation en vide de la ventouse ne se fait pas par un passage traversant la colonnette qui la supporte, mais au contraire par un tube flexible raccordé extérieurement sur la rotule, il devient possible de donner à celle-ci un débattement sensiblement accru, généralement d'au moins 90°. L'organe selon l'invention est ainsi adapté à la préhension de pièces de géométries complexes, différentes d'une pièce à l'autre, sans adaptation particulière.

Le tube flexible relie l'orifice du premier passage à un deuxième orifice du deuxième passage.

Dans ce cas, le deuxième passage comprend de préférence un troisième orifice, apte à être relié successivement à une source d'air comprimé, lors d'une phase d'orientation automatique de la rotule, et à la source de vide précitée lors d'une phase de préhension d'une pièce. Grâce à cet agencement, il devient possible de faire précéder la préhension de la pièce d'une phase préliminaire, au cours de laquelle la rotule s'oriente automatiquement par rapport à la surface en regard de la pièce, afin de présenter une orientation optimale par rapport à ladite surface.

Avantageusement, la rotule présente un centre de gravité décalé à l'opposé du moyen formant ventouse, par rapport à un centre géométrique de ladite rotule. Grâce à cet agencement, la rotule revient automatiquement dans une position neutre horizontale lorsque l'installation n'est pas en fonctionnement.

De préférence, le moyen formant ventouse comprend une ventouse déformable et une couronne d'appui placée à l'intérieur de la ventouse. La présence de la couronne d'appui permet de mieux répartir sur la pièce les efforts créés par le vide, ce qui évite un poinçonnement indésirable de la pièce à usiner.

Dans la pratique, le support de rotule comporte une cavité en forme de calotte sphérique, dans laquelle est reçue la rotule. L'angle au centre de cette cavité est au plus égal à environ 90°.

Afin d'assurer une bonne répartition globale des efforts, la ventouse déformable présente avantageusement un diamètre sensiblement égal au diamètre d'un cercle délimitant la cavité en forme de calotte sphérique.

Comme on l'a déjà observé, la rotule est avantageusement apte à pivoter d'au moins 90° dans son support.

### Brève description des dessins

On décrira à présent, à titre d'exemple non limitatif, un mode de réalisation préféré de l'invention, en se référant aux dessins annexés, dans lesquels :
- la figure 1 est une vue de côté, en coupe partielle, qui représente schématiquement une partie d'une table universelle équipée de plusieurs organes de préhension orientables conformes à l'invention ; et
- la figure 2 est une vue en coupe illustrant à plus grande échelle l'un des organes de préhension orientables de la figure 1.

### Description détaillée d'un mode de réalisation préféré de l'invention

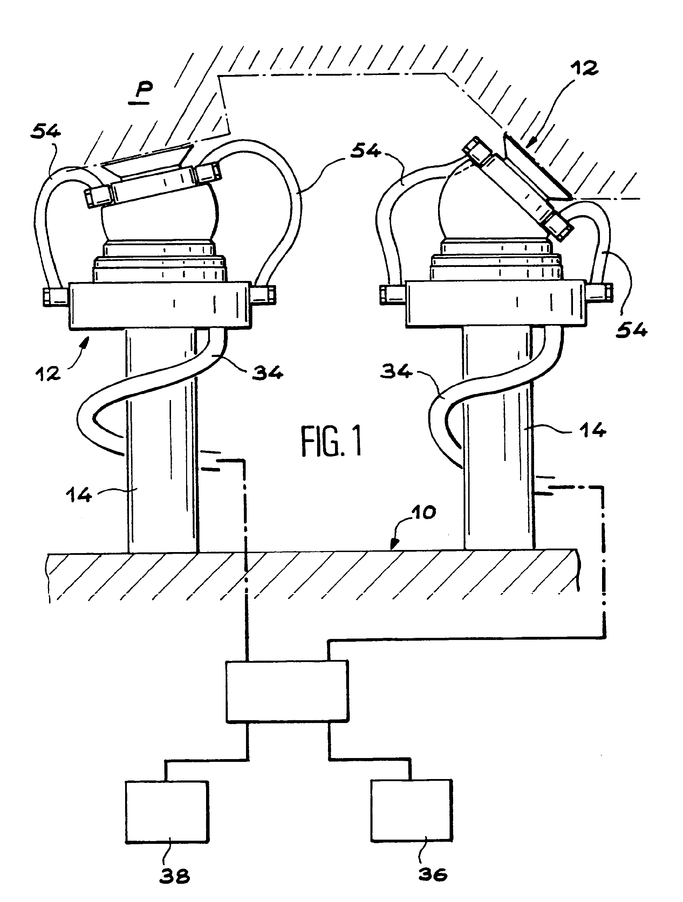

Sur la figure 1, on a représenté de façon très schématique une partie d'une table universelle 10, destinée au transport ou à l'usinage de pièces P.

Pour permettre cette préhension, la table universelle 10 porte, sur sa face supérieure, un certain nombre d'organes de préhension orientables 12 montés sur des colonnettes 14. Seuls deux organes de préhension orientables 12 sont représentés sur la figure 1. Dans la pratique, le nombre des organes de préhension 12 implantés sur la table universelle 10 dépend notamment de la dimension de cette table et du nombre de pièces que l'on désire transporter.

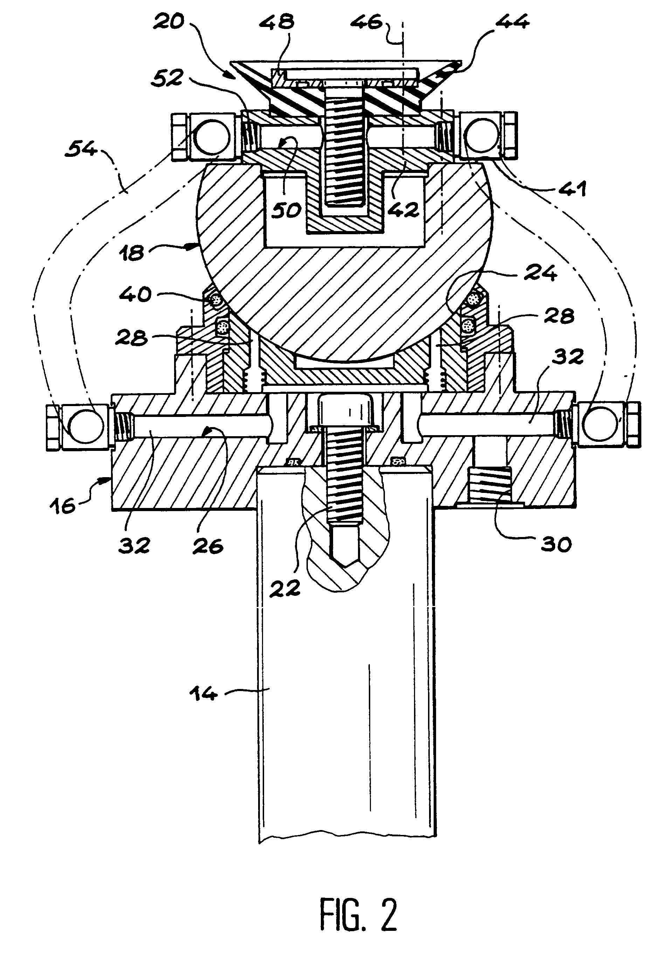

Conformément à l'invention et comme l'illustre plus précisément la figure 2, chacun des organes de préhension orientables 12 comprend un support de rotule ouvert 16, fixé à l'extrémité de la colonnette 14, ainsi qu'une rotule 18 apte à pivoter dans le support de rotule 16. En outre, dans sa partie située à l'extérieur du support de rotule 16, chacune des rotules 18 porte un moyen formant ventouse 20.

Le support de rotule ouvert 16 se présente sous la forme d'une pièce massive, en plusieurs parties. Cette pièce est fixée à l'extrémité de la colonnette 14, par exemple au moyen d'une vis 22. Sur sa face supérieure, le support de rotule ouvert 16 comporte une cavité 24, en forme de calotte sphérique, sur laquelle la rotule 18 repose par gravité.

La pièce massive formant le support de rotule 16 est traversée intérieurement par un passage 26. Ce passage 26 débouche dans la cavité 24 par un ou plusieurs orifices 28. Il débouche également sur la face inférieure du support de rotule 16 par un orifice 30 et sur les côtés de ce support 16 par au moins un orifice 32 (deux dans l'exemple représenté).

Comme l'illustre schématiquement la figure 1, une première extrémité d'un tube 34 est raccordée sur l'orifice 30. Dans le mode de réalisation représenté, la colonnette 14 est extensible. Le tube 34 est alors un tube souple, enroulé par exemple en hélice autour de la colonnette 14. L'extrémité opposée du tube 34 peut être reliée à volonté soit à une source d'air comprimé 36, soit à une source de vide 38, comme on l'a illustré schématiquement sur la figure 1.

La périphérie de la cavité 24 en forme de calotte sphérique présente une rainure circulaire dans laquelle est logé un joint d'étanchéité torique 40. Ce joint d'étanchéité 40 est en contact étanche avec la surface extérieure de la rotule 18. Il isole ainsi normalement de l'atmosphère extérieure l'espace compris entre la cavité 24 et la rotule 18, dans lequel débouchent les orifices 28 du passage 26.

La rotule 18 se présente sous la forme d'une pièce sphérique massive sur laquelle est usiné un méplat 41 servant à fixer le moyen formant ventouse 20. Plus précisément, le moyen formant ventouse 20 comprend une embase 42, fixée sur le méplat 41, par exemple au moyen de vis (non représentées). Une ventouse déformable 44 est fixée sur l'embase 42, par exemple au moyen de vis 46. En outre, une couronne d'appui rigide 48 est montée coaxialement à l'intérieur de la ventouse 44 et fixée à celle-ci, ainsi qu'à l'embase 42, par les vis 46.

L'embase 42, la ventouse 44 et la couronne d'appui 48 sont traversées par un passage 50 dont une extrémité débouche à l'intérieur de la ventouse 44 et de la couronne d'appui 48. Le passage 50 comprend de plus au moins un orifice 52 (deux dans l'exemple représenté) qui débouche vers l'extérieur, sur l'embase 42, à l'extérieur de la cavité 24 formée dans le support de rotule 16.

Chacun des orifices 32 du passage 26 est raccordé sur l'un des orifices 52 du passage 50 par un tube flexible 54, comme l'illustre schématiquement la figure 1.

L'agencement qui vient d'être décrit autorise un débattement angulaire d'au moins environ 90° (+ ou - 45°) de la rotule 18 par rapport au support de rotule 16. Cette caractéristique découle principalement du fait que la mise sous vide de la ventouse 44 s'effectue depuis l'extérieur du support de rotule 16, par le tube flexible 54. Elle découle aussi du fait que la calotte sphérique formée par la cavité 24 présente un angle au centre au plus égal à environ 90°. Le débattement particulièrement important de la ventouse 44 permet d'envisager le maintien de pièces de formes particulièrement complexes, ce qui n'était pas possible auparavant.

Par ailleurs, comme l'illustre la figure 2, le diamètre de la ventouse déformable 44 est sensiblement égal au diamètre du cercle délimitant la cavité 24 en forme de calotte sphérique. Cet agencement permet d'assurer une bonne répartition globale des efforts.

Dans le mode de réalisation représenté, la pièce massive formant la rotule 18 est évidée partiellement au centre du méplat 41 portant le moyen formant ventouse 20. Le centre de gravité de la rotule 18 est ainsi décalé à l'opposé du moyen formant ventouse 20, par rapport au centre géométrique de la rotule. Cette caractéristique permet à la ventouse 44 de revenir automatiquement en position neutre horizontale lorsque l'organe de préhension est au repos.

Lors de la mise en oeuvre d'un tel organe de préhension orientable, la colonnette 14 est tout d'abord mise à la bonne hauteur par rapport à la pièce à usiner. Cette opération peut être réalisée de façon manuelle ou automatique, par exemple à l'aide d'une commande numérique. De l'air sous pression est ensuite injecté par le tube 34 et l'orifice 30 du passage 26, ce qui a pour effet de créer un coussin d'air entre la rotule 18 et le support 16 ainsi qu'entre la pièce P et la ventouse 44. Un positionnement automatique est ainsi assuré de façon particulièrement efficace et fiable.

Il est à noter que, dans une variante de réalisation avantageuse de l'invention, le circuit de commande du moyen formant ventouse 20 peut être dissocié du circuit de commande débouchant entre la rotule 18 et la cavité 24. Cela permet, par exemple, de bloquer par le vide la rotule 18 dans une position bien déterminée, tout en pilotant indépendamment la mise sous vide ou la sustentation de la pièce par la ventouse. Dans ce cas, le réglage de l'orientation de la rotule 18 peut être effectué soit manuellement, soit à l'aide d'une commande numérique.

## Revendications

1. Organe de préhension orientable, comprenant une rotule (18), un support de rotule ouvert (16) dans lequel peut pivoter ladite rotule, un moyen formant ventouse (20) porté par la rotule (18) à l'extérieur dudit support de rotule (16), des moyens pour maintenir la rotule (18) dans ledit support de rotule (16), et un premier passage (50) débouchant à l'intérieur du moyen formant ventouse (20) et comportant au moins un orifice (52) formé sur l'un parmi la rotule (18) et le moyen formant ventouse (20), ledit orifice (52) étant raccordé sur un tube flexible (54), à l'extérieur du support de rotule (16), et apte à être relié à une source de vide, **caractérisé en ce que** les moyens pour maintenir la rotule (18) dans ledit support de rotule (16) comprennent un deuxième passage (26) traversant le support de rotule (16), au moins un premier orifice (28) de ce deuxième passage débouchant entre la rotule (18) et le support de rotule (16) et **en ce que** le tube flexible (54) relie ledit orifice (52) du premier passage (50) à un deuxième orifice (32) du deuxième passage (26).

2. Organe de préhension orientable selon la revendication 1, dans lequel le deuxième passage (26) comprend un troisième orifice (30), apte à être relié successivement à une source d'air comprimé (36), lors d'une phase d'orientation automatique de la rotule (18), et à ladite source de vide (38), lors d'une phase de préhension d'une pièce.

3. Organe de préhension orientable selon l'une quelconque des revendications précédentes, dans lequel la rotule (18) présente un centre de gravité décalé à l'opposé du moyen formant ventouse (20), par rapport à un centre géométrique de ladite rotule.

4. Organe de préhension orientable selon l'une quelconque des revendications précédentes, dans lequel le moyen formant ventouse (20) comprend une ventouse déformable (44) et une couronne d'appui (48) placée à l'intérieur de la ventouse.

5. Organe de préhension orientable selon l'une quelconque des revendications précédentes, dans lequel ledit support de rotule (16) comporte une cavité (24) en forme de calotte sphérique, d'angle au centre au plus égal à environ 90°.

6. Organe de préhension orientable selon les revendications 4 et 5 combinées, dans lequel la ventouse déformable (44) présente un diamètre sensiblement égal au diamètre d'un cercle délimitant ladite cavité (24) en forme de calotte sphérique.

7. Organe de préhension orientable selon l'une quelconque des revendications précédentes, dans lequel la rotule (18) est apte à pivoter d'au moins 90° dans ledit support de rotule (16).

## Claims

1. Rotatable gripping device comprising a ball joint (18), an open ball joint support (16) in which the said ball joint can pivot, a means forming a suction cup (20) supported by the ball joint (18) on the outside of the said ball joint support (16), means of holding the ball joint (18) in the said ball joint support (16), and a first duct (50) passing inside the means forming the suction cup (20) and comprising at least one orifice (52) formed either on the ball joint (18) or the means forming the suction cup (20), the said orifice (52) being connected to a flexible tube (54) outside the ball joint support (16), and that can be connected to a vacuum source, **characterized in that** the means of holding the ball joint (18) and the said ball joint support (16) comprise a second duct (26) passing through the ball joint support (16), at least one first orifice (28) of this second duct leading into the space between the ball joint (18) and the ball joint support (16) and **in that** the flexible tube (54) connects the said orifice (52) in the first duct (50) to a second orifice (32) in the second duct (26).

2. Rotatable gripping device according to claim 1, in which the second duct (26) comprises a third orifice (30) that can be connected firstly to a compressed air source (26) during a phase in which the ball joint (18) is automatically oriented, and to the vacuum source (38) mentioned above during a part gripping phase.

3. Rotatable gripping device according to any one of the preceding claims, in which the centre of gravity of the ball joint (18) is offset in the opposite direction to the said means forming a suction cup (20), about a geometric centre of the said ball joint.

4. Rotatable gripping device according to any one of the preceding claims, in which the means forming a suction cup (20) comprises a deformable suction cup (44) and a thrust ring (48) placed inside the suction cup.

5. Rotatable gripping device according to any one of the preceding claims, in which the said ball joint support (16) comprises a spherical cap (24) shaped cavity with an angle at the centre equal to not more than about 90°.

6. Rotatable gripping device according to claims 4 and 5 combined, in which the diameter of the deformable suction cup (44) is approximately equal to the diameter of a circle delimiting the said spherical cap shaped cavity (24).

7. Rotatable gripping device according to any one of the preceding claims, in which the ball joint (18) is capable of pivoting at least 90° inside the said ball joint support (16).

## Patentansprüche

1. Ausrichtbares Greifelement mit einem Kugelgelenk (18), einem offenen Kugelgelenklager (16), in dem sich das Kugelgelenk drehen kann, einem einenSaugnapf (20) bildenden Mittel, das von dem Kugelgelenk (18) außerhalb des Kugelgelenklagers (16) getragen wird, Mitteln zum Halten des Kugelgelenks (18) in dem Kugelgelenklager (16) und einem ersten Durchgang (50), der in das Innere des einen Saugnapf (20) bildenden Mittels mündet und mindestens eine Öffnung (52) aufweist, die entweder an dem Kugelgelenk (18) oder an dem einen Saugnapf bildenden Mittel (20) ausgebildet ist, wobei die Öffnung (52) mit einem flexiblen Rohr (54) außerhalb des Kugelgelenklagers (16) verbunden ist und mit einer Vakuumquelle verbunden werden kann,
**dadurch gekennzeichnet, dass** die Mittel zum Halten des Kugelgelenks (18) in dem Kugelgelenklager (16) einen zweiten Durchgang (26) umfassen, welcher das Kugelgelenklager (16) durchsetzt, wobei mindestens eine erste Öffnung (28) dieses zweiten Durchgangs zwischen dem Kugelgelenk (18) und dem Kugelgelenklager (16) mündet, und dass das flexible Rohr (54) die Öffnung (52) des ersten Durchgangs (50) mit einer zweiten Öffnung (32) des zweiten Durchgangs (26) verbindet.

2. Ausrichtbares Greifelement nach Anspruch 1, wobei der zweite Durchgang (26) eine dritte Öffnung (30) umfasst, die nacheinander mit einer Druckluftquelle (36) während einer automatischen Ausrichtungsphase des Kugelgelenks (18) sowie mit der Vakuumquelle (38) während einer Phase des Greifens eines Teils verbunden werden kann.

3. Ausrichtbares Greifelement nach einem der vorangehenden Ansprüche, wobei das Kugelgelenk (18) ein Schwerkraftzentrum aufweist, das gegenüber dem einen Saugnapf bildenden Mittel (20) in Bezug auf ein geometrisches Zentrum des Kugelgelenks versetzt ist.

4. Ausrichtbares Greifelement nach einem der vorangehenden Ansprüche, wobei das einen Saugnapf bildende Mittel (20) einen verformbaren Saugnapf (44) und einen im Inneren des Saugnapfes angeordneten Auflagekranz (48) umfasst.

5. Ausrichtbares Greifelement nach einem der vorangehenden Ansprüche, wobei das die Kugelgelenkhalterung (16) eine Ausnehmung (24) in Form einer Kugelkappe, mit einem Winkel in der Mitte von höchstens etwa 90°, aufweist.

6. Ausrichtbares Greifelement nach den Ansprüchen 4 und 5 in Kombination, wobei der verformbare Saugnapf (44) einen Durchmesser aufweist, der im wesentlichen gleich dem Durchmesser eines Kreises ist, welcher die Ausnehmung (24) in Form einer Kugelkappe umgrenzt.

7. Ausrichtbares Greifelement nach einem der vorangehenden Ansprüche, wobei sich das Kugelgelenk (18) um mindestens 90° in dem Kugelgelenklager (16) drehen kann.
